# EUROPEAN PATENT APPLICATION

(11) **EP 4 787 736 A1**
(43) Date of publication of application: **05.08.2026**
(21) Application number: 25189147.9
(22) Date of filing: 11.07.2025
(51) Int. Cl.: H04B 7/185

(54) **TRANSMISSION APPARATUS AND METHOD, RECEIVING APPARATUS AND METHOD FOR CROSS-SATELLITE COMMUNICATION NETWORK**

(30) Priority: 03.02.2025 TW 114103865
(71) Applicant: Industrial Technology Research Institute, 31040 Hsinchu (TW)
(72) Inventor: CHOU, Ching-Chun, Taipei City (TW); LO, Chiu-Hsin, Minsheng Vil. (TW); XIAO, Sheng-Rong, Yuchang Vil. (TW)
(74) Representative: Ström & Gulliksson AB

(57) **Abstract**

Transmission apparatus and method, receiving apparatus and method are provided. The transmission apparatus generates neighbor network information based on a communication protocol corresponding to a communication satellite. The transmission apparatus transmits a mediate packet including the neighbor network information to the receiving apparatus. The receiving apparatus obtains a second header, based on a first header and the neighbor network information of the mediate packet. The receiving apparatus transmits a forwarded packet to the communication satellite based on the communication protocol, wherein the forwarded packet includes the second header and data of the mediate packet.

## Description

### BACKGROUND

### Field of Invention

The present disclosure relates to transmission apparatus and method, receiving apparatus and method. More particularly, the present disclosure relates to transmission apparatus and method, receiving apparatus and method based on multiple-satellite network architecture.

### Description of Related Art

In order to provide high coverage, high data rate, and continuity of wireless services for mobile networks, the formation of a Hybrid Satellite-Terrestrial Network (HSTN) by combining Terrestrial Networks (TN) and Non-Terrestrial Networks (NTN) will be the trend of future technology development.

However, different satellite network architectures (e.g., satellite networks provided by different providers) are not only unable to share frequency bands and hardware equipment, but also have different packet formats. As a result, when the satellite network connection is interrupted, the user terminal cannot transmit data through the satellite network of other architectures.

In view of this, how to provide transmission technology across satellite networks is the goal that the industry strives to work on.

### SUMMARY

The disclosure provides a transmission apparatus comprising a communication interface and a processor. The processor is electrically connected to the communication interface. The communication interface is configured to be communicatively connected to a receiving apparatus, wherein the communication interface is configured to be communicatively connected to a first communication satellite based on a first communication protocol. The transmission apparatus is communicatively connected to a second communication satellite based on a second communication protocol. There is a first communication quality between the communication interface and the first communication satellite. The transmission apparatus is configured to execute the following steps: the processor determining whether the first communication quality is lower than a default value, if the first communication quality is lower than the default value, generating neighbor network information based on the second communication protocol, and the processor generating a mediate packet based on a first header, a first packet data, and the neighbor network information, wherein the first header corresponds to the first communication protocol, the neighbor network information comprises a transformation data corresponding to a second header, and the second header corresponds to the second communication protocol; and the communication interface transmitting the mediate packet to the receiving apparatus.

The disclosure further provides a receiving apparatus configured to receive a first mediate packet. The first mediate packet comprises a first header and first neighbor network information. The receiving apparatus is communicatively connected to a second communication satellite based on a second communication protocol to transmit a first alternative packet. The first alternative packet comprises a second header, and the first alternative packet corresponds to the first mediate packet. The receiving apparatus comprises a communication interface and a processor. The communication interface is configured to receive the first mediate packet and transmit the first alternative packet. The processor is electrically connected to the communication interface and configured to receive the first mediate packet, remove the first neighbor network information from the first mediate packet to transform the first mediate packet into the first alternative packet, and transmit the first alternative packet to the communication interface.

The disclosure further provides a transmission method being adapted for use in an electronic apparatus. The transmission method comprises the following steps: determining whether a first communication quality is lower than a default value, if the first communication quality is lower than the default value, generating neighbor network information based on a second communication protocol; generating a mediate packet based on a first header, a first packet data, and the neighbor network information, wherein the first header corresponds to a first communication protocol, the neighbor network information comprises a transformation data corresponding to a second header, and the second header corresponds to the second communication protocol; and transmitting the mediate packet to a receiving apparatus.

The disclosure further provides a receiving method being adapted for use in an electronic apparatus. The receiving method comprises the following steps: receiving a first mediate packet, wherein the first mediate packet comprises a first header and first neighbor network information; removing the first neighbor network information from the first mediate packet to transform the first mediate packet into a first alternative packet; and transmitting the first alternative packet based on a second communication protocol, wherein the first alternative packet comprises a second header, and the first alternative packet corresponds to the first mediate packet.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a schematic diagram illustrating two satellite networks according to some embodiments of the present disclosure.
Fig. 2 is a schematic diagram illustrating a user terminal according to a first embodiment of the present disclosure.
Fig. 3 is a schematic diagram illustrating cross-network transmission according to some embodiments of the present disclosure.
Fig. 4 is a flow diagram illustrating the user terminal uploading a packet according to some embodiments of the present disclosure.
Fig. 5 is a flow diagram illustrating the user terminal downloading a packet according to some embodiments of the present disclosure.
Fig. 6 is a schematic diagram illustrating cross-network packets according to some embodiments of the present disclosure.
Fig. 7 is a schematic diagram illustrating cross-network transmission according to another embodiment of the present disclosure.
Fig. 8 is a schematic diagram illustrating cross-network transmission based on an exchange node according to some embodiments of the present disclosure.
Fig. 9 is a flow diagram illustrating a transmission method according to a second embodiment of the present disclosure.
Fig. 10 is a flow diagram illustrating a receiving method according to the second embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

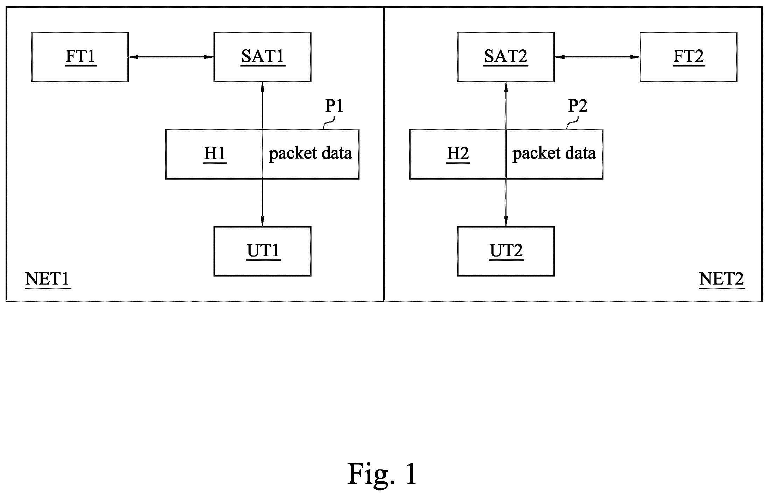

Please refer to Fig. 1, which is a schematic diagram illustrating two satellite networks NET1 and NET2 according to some embodiments of the present disclosure. The satellite network NET1 comprises a user terminal UT1, the communication satellite SAT1, and a ground station FT1; and the satellite network NET2 comprises a user terminal UT2, the communication satellite SAT2, and a ground station FT2.

In some embodiments, the user terminals UT1 and UT2 are terminal apparatuses of satellite network users, the ground stations FT1 and FT2 are base stations for transforming packets between a satellite network and a core network and/or internet, and the communication satellites SAT1 and SAT2 are configured to transfer packets of the satellite network between the ground stations and the user terminals.

As shown in Fig. 1, the architectures of the satellite networks NET1 and NET2 are similar, the user terminal UT1/UT2 is communicatively connected to the communication satellite SAT1/SAT2, and the communication satellite SAT1/SAT2 is communicatively connected to the ground station FT1/FT2. As a result, through transferring packets by the communication satellite SAT1/SAT2, the user terminal UT1/UT2 is able to transmit and/or receive packets with the ground station FT1/FT2 to be connected to the ground segment of the network (e.g., 4G or 5G network).

Furthermore, based on the communication protocol of the satellite network NET1, the packet P1 transmitted between the user terminal UT1 and the communication satellite SAT1 comprises a header H1 and packet data. On the other hand, based on the communication protocol of the satellite network NET2, the packet P2 transmitted between the user terminal UT2 and the communication satellite SAT2 comprises a header H2 and packet data. Since the communication protocols of the satellite networks NET1 and NET2 are different, the packet fields, formats, and/or encoding of the headers H1 and H2 are different.

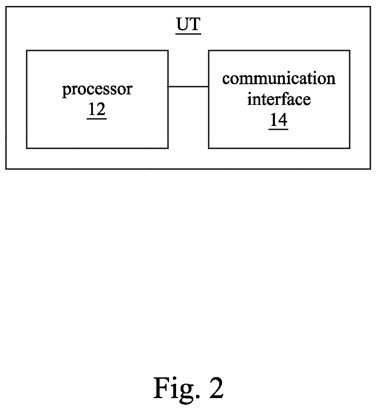

About the structure of the user terminals UT1 and UT2, please refer to Fig. 2, which is a schematic diagram illustrating a user terminal UT according to a first embodiment of the present disclosure. The user terminal UT is an example of the user terminal UT1 and/or UT2.

The user terminal UT comprises a processor 12 and a communication interface 14, wherein the processor 12 is electrically connected to the communication interface 14, and the communication interface 14 is configured to be communicatively connected to a communication satellite (e.g., the communication satellite SAT1 and/or SAT2) and another terminal apparatus (e.g., the user terminal UT1 and/or UT2) based on at least one communication protocol.

For example, the communication interface 14 of the user terminal UT is communicatively connected to a communication satellite based on the communication protocol of a satellite network and communicatively connected to another terminal apparatus based on a protocol such as Bluetooth, Wi-Fi, Ethernet, etc.

In some embodiments, the processor 12 comprises a central processing unit (CPU), a graphics processing unit (GPU), a microcontroller unit (MCU), a multi-processor, a distributed processing system, an application specific integrated circuit (ASIC), and/or a suitable processing unit.

However, the satellite network architectures of the satellite networks NET1 and NET2 are different. For example, the satellite networks NET1 and NET2 are provided by different providers, and the corresponding packet fields are different; or the satellite networks NET1 and NET2 utilize different packet encapsulation formats respectively. Therefore, the user terminal UT1 is not able to transmit packets to the communication satellite SAT2 via the satellite network NET2.

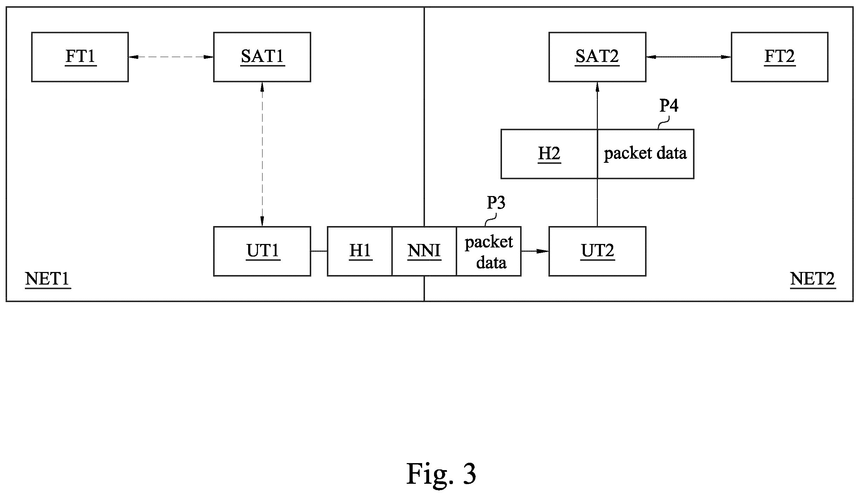

Please refer to Fig. 3, which is a schematic diagram illustrating cross-network transmission according to some embodiments of the present disclosure. As shown in the figure, the user terminal UT1 transmits a packet P3 to the user terminal UT2, in order to transmit the data in the packet to the satellite network NET2 via the user terminal UT2, wherein the packet P3 comprises a header H1 corresponding to the satellite network NET1, packet data, and neighbor network information NNI.

The neighbor network information NNI generated by the user terminal UT1 records the information for modifying the header H1 into a header H2 corresponding to the satellite network NET2. Accordingly, after receiving the packet P3, the user terminal UT2 is able to generates the header H2 for the satellite network NET2 based on the neighbor network information NNI. Furthermore, the user terminal UT2 generates a packet P4 based on the header H4 and the packet data and transmits the packet P4 to the communication satellite SAT2 to transmit the packet data via the satellite network NET2.

For example, based on the difference between the packet formats of the satellite networks NET1 and NET2, the user terminal UT1 records the information required by the header H2 but not included in the header H1 in the neighbor network information NNI. When the formats of the headers H1 and H2 are different, the user terminal UT1 may records the format of the header H1 in the neighbor network information **NNI** to let the receiver to transform the packet format.

Correspondingly, the user terminal UT2 is able to obtain the required information for the header H2 based on the header H1 and the neighbor network information **NNI** and generate the header H2 accordingly.

Specifically, the communication interface 14 of the user terminal UT1 is configured to be communicatively connected to the user terminal UT2, wherein the communication interface 14 is configured to be communicatively connected to the communication satellite SAT1 based on a first communication protocol, the user terminal UT2 is communicatively connected to the communication satellite SAT2 based on a second communication protocol, there is a first communication quality between the communication interface 14 and the communication satellite SAT1. Furthermore, the user terminal UT1 is configured to execute the following steps: the processor 12 determining whether the first communication quality is lower than a default value, if the first communication quality is lower than the default value, generating neighbor network information based on the second communication protocol; the processor 12 generating a mediate packet based on a first header, a first packet data, and the neighbor network information, wherein the first header corresponds to the first communication protocol, the neighbor network information comprises a transformation data corresponding to a second header, and the second header corresponds to the second communication protocol; and the communication interface 14 transmitting the mediate packet to the user terminal UT2.

In some embodiments, the user terminal UT1 further executes the following step: the processor 12 determining a first communication quality between the communication interface and the first communication satellite.

Correspondingly, the user terminal UT2 is configured to receive a first mediate packet, the first mediate packet comprises a first header and first neighbor network information, the user terminal UT2 is communicatively connected to the communication satellite SAT2 based on a second communication protocol to transmit a first alternative packet, the first alternative packet comprises a second header, and the first alternative packet corresponds to the first mediate packet. The communication interface 14 of the user terminal UT2 is configured to receive the first mediate packet and transmit the first alternative packet. The processor 12 of the user terminal UT2 is electrically connected to the communication interface 14. The processor 12 is configured to receive the first mediate packet, remove the first neighbor network information from the first mediate packet to transform the first mediate packet into the first alternative packet, and transmit the first alternative packet to the communication interface 14.

Through the above steps, the user terminal UT1 may transmit the packet to the network via the user terminal UT2 while the communication quality with the communication satellite SAT1 is poor (e.g., disconnected, slow transmission), wherein the mediate packet is the packet transmitted between the user terminals (e.g., the packet P3), and the alternative packet is the packet transmitted by the user terminal to the communication satellite (e.g., the packet P4).

In some embodiments, the second header is generated by the user terminal UT2 based on the first header and the first neighbor network information, and the second header corresponds to the second communication protocol.

In some embodiments, the first alternative packet comprises the first packet data in the first mediate packet.

Correspondingly, when a packet needs to be received from the network, the user terminal UT1 may receive the packet from the satellite network NET2 through similar steps.

For example, after the user terminal UT1 transmits a packet via the satellite network NET2, the responding packet corresponding to the packet will be transmitted to the ground station FT2 and further transferred by the user terminal UT2 to the user terminal UT1 via the satellite network NET2.

Specifically, the processor 12 of the user terminal UT2 is further configured to execute the following steps: in response to receiving a second alternative packet corresponding to a transmission apparatus from the second communication satellite, generating second neighbor network information based on a first communication protocol corresponding to the first mediate packet, wherein the second alternative packet comprises a second packet data; and transmitting a second mediate packet to the transmission apparatus, wherein the second mediate packet comprises the second neighbor network information and the second packet data.

In some embodiments, in order to generate the neighbor network information NNI, before transmitting the mediate packet, the user terminals UT1 and UT2 update the communication protocol and/or packet format of the satellite networks NET1 or NET2 with each other.

Specifically, the step of the processor 12 of the user terminal UT1 generating the neighbor network information further comprises: receiving a packet format from the receiving apparatus, wherein the packet format corresponds to the second communication protocol; and generating the neighbor network information based on the packet format. Similarly, the user terminal UT2 may also receive a packet format corresponding to the first communication protocol from the transmission apparatus through similar steps.

In some embodiments, the user terminal UT1 may also compare the communication quality between the communication satellite SAT1 and the user terminal UT1 and the communication quality between the communication satellite SAT2 and the user terminal UT2 to select whether to transmit the packet via the satellite networks NET1 or NET2 accordingly.

Specifically, the processor 12 of the user terminal UT1 is further configured to execute the following steps: comparing the first communication quality and a second communication quality between the receiving apparatus and the second communication satellite; and in response to the first communication quality being higher than the second communication quality, transmitting the first packet data to the first communication satellite.

In some embodiments, in response to the first communication quality being higher than the second communication quality, the user terminal UT1 does not generate the neighbor network information.

Through the above steps, the user terminal UT1 calculates the communication qualities of the satellite networks NET1 and NET2, and the communication qualities can be calculated according to information such as the connection stabilities, bandwidths, and/or capacities of the satellite networks NET1 and NET2 and are configured to represent the transmission efficiency weights of the satellite networks NET1 and NET2. In accordance, the user terminal UT1 is able to select whether to transmit the packet via the satellite networks NET1 or NET2 based on communication qualities.

It is noted that, the satellite networks NET1 or NET2 is taken as an example in Fig. 3, but the present disclosure is not limited thereto. In other embodiments, the user terminal UT1 and/or UT2 may also be communicatively connected to another user terminal to transmit packets via another satellite network, and the embodiments will not be repeated for clarity.

In some embodiments, in order to confirm the communication qualities of the satellite networks NET1 and NET2, the user terminals UT1 and UT2 periodically update the connection information of the communication satellites SAT1 and SAT2 with each other.

For example, the connection information transmitted by the user terminal UT1 to the user terminal UT2 comprises information such as the connection stability, bandwidth, and/or capacity between the user terminal UT1 and the communication satellite SAT1; similarly, the connection information transmitted by the user terminal UT2 to the user terminal UT1 comprises information such as the connection stability, bandwidth, and/or capacity between the user terminal UT2 and the communication satellite SAT2.

Specifically, the processor 12 of the user terminal UT1 is further configured to execute the following steps: receiving a connection information from the receiving apparatus, wherein the connection information corresponds to the receiving apparatus and the second communication satellite; and determining the second communication quality based on the connection information.

In accordance, the user terminals UT1 and UT2 is able to determine the corresponding communication quality based on the connection information and select whether to transmit the packet via the satellite networks NET1 or NET2.

In some embodiments, the user terminal UT1 and/or UT2 generate and/or translate the transformation data through looking up a table. The user terminal UT1 and/or UT2 store a corresponding table of communication protocols of the satellite networks NET1 and NET2 in advance, and the corresponding table records information such as packet formats, satellite network categories (e.g., LEO, GEO, MEO), connection categories (e.g., P2P, Broadcast, Multicast), connection types (e.g., Ethernet, Mobile Network, WIFI, Bluetooth, Radio System), connection information (e.g., MAC address, IMEI, Radio Channel), and/or multihop routing, etc.

As a result, while generating or translating the neighbor network information, the user terminals UT1 and UT2 may obtain the required information for switching communication protocols and transforming headers through looking up the table.

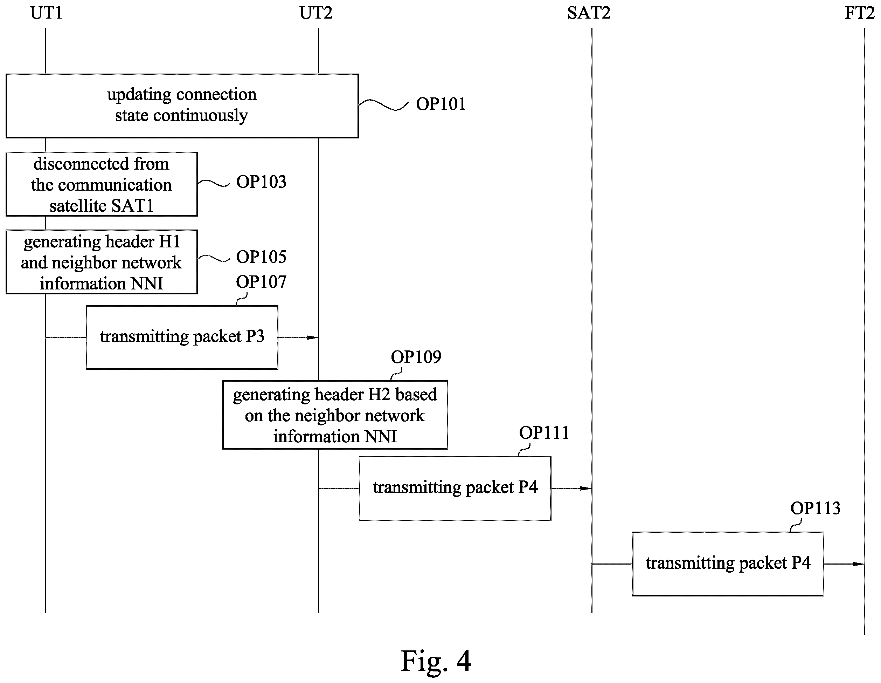

About the steps of the user terminal UT1 uploading a packet via the satellite network NET2 while being disconnected from the communication satellite SAT1, please refer to Fig. 4.

First, in a step OP101, the user terminals UT1 and UT2 update the connection states of each other continuously.

Next, in a step OP103, the user terminal UT1 determines that it is disconnected from the communication satellite SAT1.

Correspondingly, in a step OP105, the user terminal UT1 generates a header H1 and neighbor network information NNI.

Next, in a step OP107, the user terminal UT1 transmits the packet P3 to the user terminal UT2, wherein the packet P3 comprises the header H1 and the neighbor network information NNI.

Next, in a step OP109, the user terminal UT2 generates a header H2 based on the neighbor network information NNI in the packet P3.

Next, in a step OP111, the user terminal UT2 transmits the packet P4 to the communication satellite SAT2, wherein the packet P4 comprises the header H2.

Finally, in a step OP113, the communication satellite SAT2 transmits the packet P4 to the ground station FT2.

As a result, the user terminal UT1 uploads the packet data via the satellite network NET2.

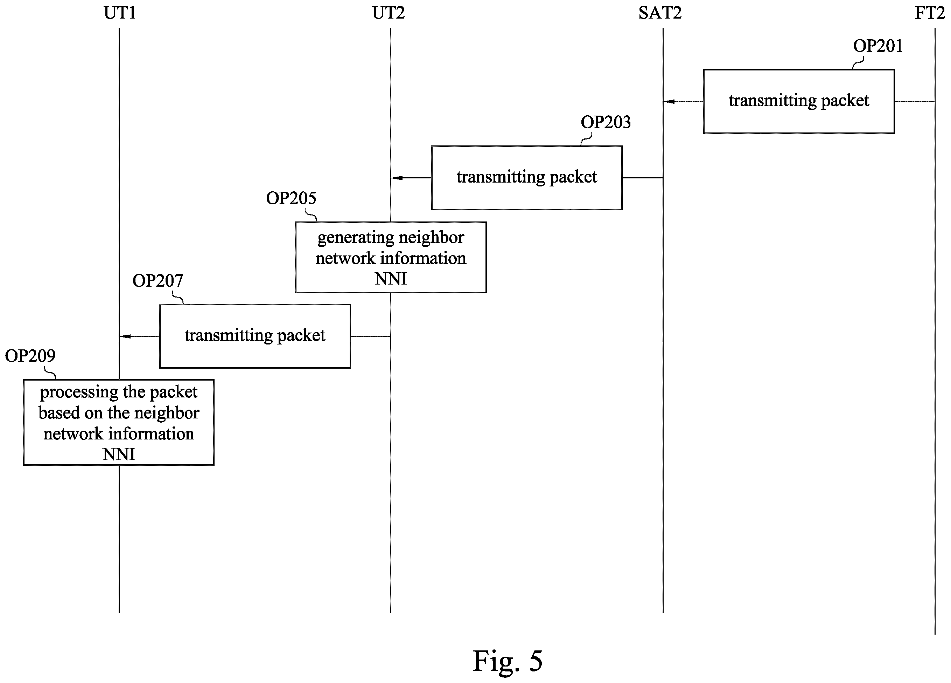

Accordingly, about the steps of the user terminal UT1 downloading a packet via the satellite network NET2, please refer to Fig. 5.

First, in a step OP201, after receiving the packet needed to be transmitted to the user terminal UT1, the ground station FT2 transmits the packet to the communication satellite SAT2, wherein the packet is transmitted based on the communication protocol and packet format of the satellite network NET2.

Next, in a step OP203, the communication satellite SAT2 transmits the packet to the user terminal UT2, wherein the packet is transmitted based on the communication protocol and packet format of the satellite network NET2.

Next, in a step OP205, the user terminal UT2 generates neighbor network information NNI.

Next, in a step OP207, the user terminal UT2 transmits the packet to the user terminal UT1, wherein the packet comprises a header H2 and the neighbor network information NNI.

Finally, in a step OP209, the user terminal UT1 processes the packet data based on the neighbor network information NNI in the packet (e.g., confirming the attributes of the packet).

As a result, the user terminal UT1 downloads the packet data via the satellite network NET2.

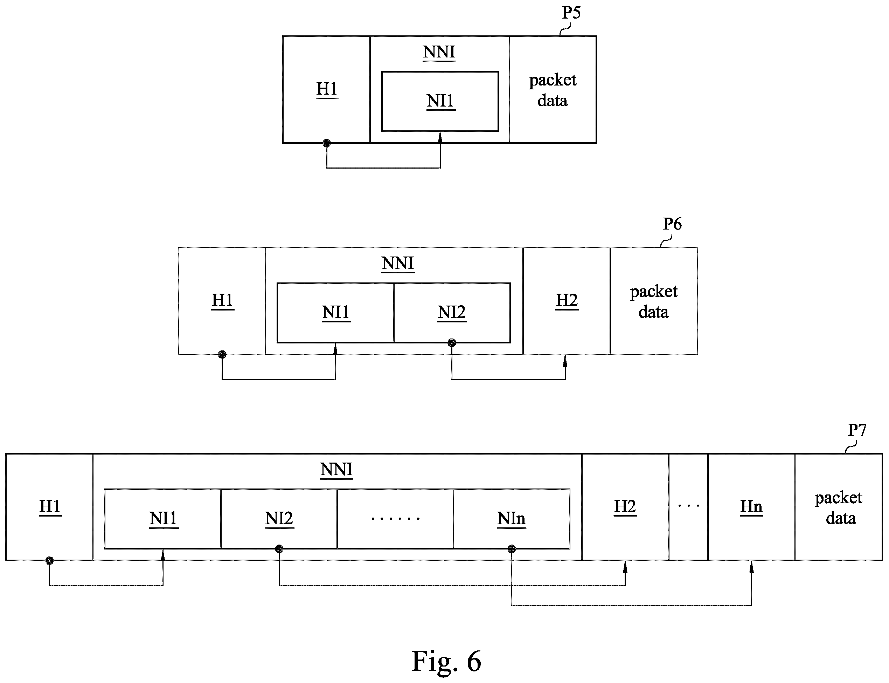

It is noted that, the content of the neighbor network information NNI is determined based on the packet formats of the satellite networks NET1 and NET2. Please refer to Fig. 6, which is a schematic diagram illustrating cross-network packets P5, P6, and P7 according to some embodiments of the present disclosure.

In an embodiment, if the satellite networks NET1 and NET2 utilize the same packet format (e.g., Generic Stream Encapsulation) with identical fields of the header, the user terminal UT1 may utilize the format of the packet P5, wherein the header H1 indicates that the packet P5 comprises neighbor network information NNI and a network information NI as a reference for the receiver (e.g., the user terminal UT2), and the network information NI records the header fields needed to be replaced by the user terminal UT2.

For example, the source terminal (ST) recorded in the header H1 is the user terminal UT1, the corresponding destination terminal (DT) is the user terminal UT2, and the network information NI records the actual destination to which the user terminal UT1 transmitting the packet. In accordance, when receiving the packet P5, the user terminal UT2 is able to replace the source terminal and the destination terminal of the header H1 based on the network information NI and generates the header H2 for transmission via the satellite network NET2.

Specifically, the step of the processor 12 of the user terminal UT1 generating the mediate packet further comprises: generating the first header comprising a first pointer based on the first communication protocol, wherein the first pointer comprises an access location of the neighbor network information in the mediate packet to make the receiving apparatus able to access the neighbor network information based on the first pointer.

Correspondingly, the processor 12 of the user terminal UT2 further execute the following steps: replacing a packet source and a packet destination in the first header; and generating the second header based on the replaced first header.

In another embodiment, if the user terminal UT1 obtains information such as a packet format of the satellite network NET2 in advance, the user terminal UT1 is able to utilize the format of the packet P6, wherein the user terminal UT1 generates the header H2 configured in the satellite network NET2, the header H1 indicates that the packet P6 comprises a network information NI1 of neighbor network information NNI, a network information NI2 of the neighbor network information NNI then indicates that the packet P6 comprises the header H2 as a reference and replacement for the receiver (e.g., the user terminal UT2).

Specifically, the step of the processor 12 of the user terminal UT1 generating the mediate packet further comprising: generating the second header based on the first header and the second communication protocol; and generating the mediate packet based on the first header, the first packet data, the neighbor network information, and the second header, wherein the neighbor network information comprises a second pointer, and the second pointer comprises an access location of the second header in the mediate packet to make the receiving apparatus able to access the second header based on the second pointer.

Accordingly, after receiving the packet P6, the user terminal UT2 is able to obtain the information in the neighbor network information NNI based on the header H1. Also, the user terminal UT2 is able to obtain the header H2 based on the neighbor network information NNI and generate a packet for transmitting in the satellite network NET2 after being replaced by the header H2.

In another embodiment, when the packet needs to be transmitted via different satellite networks or the user terminal UT1 does not obtain the communication protocol utilized by the user terminal UT2 in advance, the user terminal UT1 may utilize the packet format of the packet P7, wherein the packet P7 comprises n sets of network information NI1-NIn and headers H1-Hn suitable for n different satellite networks, and n is an integer greater than 1.

In some embodiments, the user terminal UT1 records the communication protocols and/or packet formats corresponding to the headers H2-Hn in the network information NI2-NIn.

Specifically, the step of the processor 12 of the user terminal UT1 generating the mediate packet further comprising: generating a third header based on the first header and a third communication protocol, wherein the third communication protocol is different from the first communication protocol and the second communication protocol; and generating the mediate packet based on the first header, the first packet data, the neighbor network information, the second header, and the third header, wherein the neighbor network information comprises a third pointer, and the third pointer comprises an access location of the third header in the mediate packet to make the receiving apparatus able to access the third header based on the third pointer.

Accordingly, after receiving the packet P7, the user terminal UT2 is able to obtain the information in the neighbor network information NNI based on the header H1, select the required header based on the neighbor network information NNI, and generate a packet for transmitting in the satellite network NET2 after being replaced by the selected header.

In some embodiments, when the user terminals UT1 and UT2 are provided by the same satellite network provider, the user terminals UT1 and UT2 may transmit packets with the format of the packet P5, and when the user terminals UT1 and UT2 are provided by different satellite network providers, the user terminals UT1 and UT2 may transmit packets with the format of the packet P6 or P7.

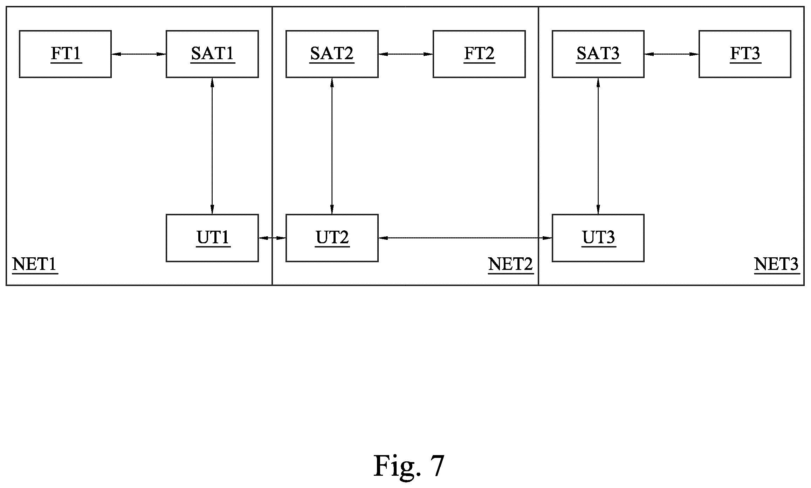

Furthermore, please refer to Fig. 7, which is a schematic diagram illustrating cross-network transmission according to another embodiment of the present disclosure. In the embodiment, in addition to the satellite networks NET1 and NET2, it also comprises a satellite network NET3, wherein the satellite network NET3 comprises a user terminal UT3 similar with the user terminals UT1 and UT2, a communication satellite SAT3 similar with the communication satellites SAT1 and SAT2, and a ground station FT3 similar with the ground stations FT1 and FT2.

As shown in the figure, the user terminals UT1 and UT3 are communicatively connected to the user terminal UT2 respectively. As a result, the user terminal UT1 and/or UT3 is able to transmit packets via the satellite network NET2, and the user terminal UT2 s able to transmit packets via the satellite networks NET1 and NET3.

Additionally, if the user terminal UT1 needs to transmit packets via the satellite network NET3 (e.g., when the user terminals UT1 and UT2 are not able to connect to the communication satellites SAT1 and SAT2, or the user terminal UT1 and/or UT2 evaluates that it is more efficient to transmit packets via the satellite network NET3), the user terminal UT1 may transmits a packet with the format of the packet P7 shown in Fig. 6 to the user terminal UT2, and the user terminal UT2 further transfers the packet to the user terminal UT3. Accordingly, the user terminals UT2 and UT3 are able to select the required network information and header from the packet P7.

In some embodiments, the user terminal UT1 is also communicatively connected to the user terminal UT3 and transmits packets through similar steps.

In some embodiments, the user terminal UT1 shown in Fig. 7 has not obtained the information of the satellite network NET3. Namely, the user terminal UT1 transmits the packet to the user terminal UT2 based on the information of the satellite network NET2.

Therefore, when the packet from the user terminal UT1 needs to be transferred via the satellite network NET3, the user terminal UT2 generates neighbor network information NNI corresponding to the satellite networks NET2 and NET3 based on the communication protocol and/or packet format of the satellite network NET3 and generates a new packet based on the header H2, the neighbor network information NNI, and packet data to transfer to the user terminal UT3, wherein the new packet may be generated by utilizing any of the aforementioned packet formats, and the details will not be repeated.

Specifically, the communication interface 14 of the user terminal UT2 is further communicatively connected to a second receiving apparatus, the second receiving apparatus is communicatively connected to a third communication satellite based on a third communication protocol, and the processor 12 of the user terminal UT2 is further configured to execute the following steps: generating third neighbor network information based on the third communication protocol; generating a third mediate packet based on the second header, a first packet data in the first mediate packet, and the third neighbor network information, wherein the third neighbor network information comprises a transformation data corresponding to a third header, and the third header corresponds to the third communication protocol; and transmitting the third mediate packet to the second receiving apparatus to make the second receiving apparatus to transmit the first packet data to the third communication satellite.

In some embodiments, when the communication quality between the user terminal UT2 and the communication satellite SAT2 is not well, the user terminal UT2 transfers the packet from the user terminal UT1 via the satellite network NET3.

Specifically, the step of the processor 12 of the user terminal UT2 generating the third neighbor network information further comprises: determining a second communication quality between the communication interface and the second communication satellite; and in response to the second communication quality being lower than a default value, generating the third neighbor network information based on the third communication protocol.

In accordance, each of the user terminals UT1, UT2, and UT3 may transmit packets via the satellite networks NET1, NET2, and NET3.

In some embodiments, the user terminals UT1 and UT2 transmit packets via an exchange node.

Specifically, the user terminal UT1 further comprises: the communication interface 14 transmitting the mediate packet to an exchange node to make the exchange node to transmit another mediate packet to the receiving apparatus.

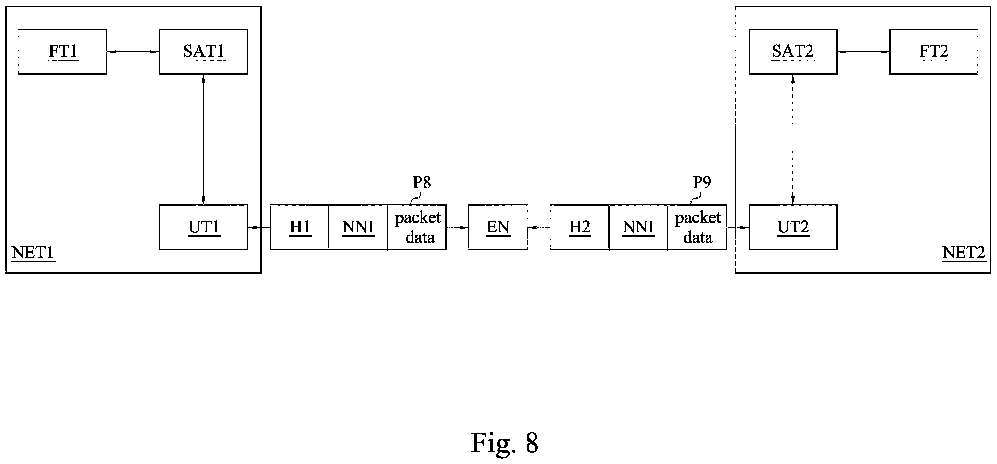

About the embodiment of transmitting packets via the exchange node, please refer to Fig. 8, which is a schematic diagram illustrating cross-network transmission based on an exchange node EN according to some embodiments of the present disclosure.

As shown in the figure, the user terminals UT1 and UT2 are communicatively connected to the exchange node EN respectively, a packet P8 (i.e., the first mediate packet) is transmitted between the user terminal UT1 and the exchange node EN based on the communication protocol and/or packet format of the satellite network NET1 (i.e., the header H1), and a packet P9 (i.e., the another mediate packet) is transmitted between the user terminal UT2 and the exchange node EN based on the communication protocol and/or packet format of the satellite network NET2 (i.e., the header H2).

It is noted that, while the user terminal UT1 or the exchange node EN generates the packet P8, and the user terminal UT2 or the exchange node EN generates the packet P9, it is required to place neighbor network information NNI into the packet. Accordingly, the exchange node EN is able to transform the header into the communication protocol and/or packet format of another satellite network based on the supplementary information in the neighbor network information NNI.

As a result, via the exchange node EN, the user terminals UT1 and UT2 is able to transmit packets between the satellite networks NET1 and NET2.

In some embodiments, the user terminal UT1 and/or UT2 also comprises a storage configured to store the connection state, communication protocol, packet format, and/or neighbor network information NNI of the satellite network NET1 and/or NET2.

Taking Fig. 3 as an example, if the user terminal UT2 stores neighbor network information NNI, the user terminal UT2 may replace the header of the packet or add the neighbor network information NNI into the packet when the user terminal UT2 receives packets needs to be transferred to the user terminal UT1 to improve the transmission efficiency.

In summary, the user terminal provided by the present disclosure may transmit packets via another satellite network while disconnected to communication satellite or connection unstable. Also, the user terminal may utilize different packet formats and neighbor network information corresponding to different combination of satellite networks. Correspondingly, the receiving user terminal is able to modify the packet and transmit via another satellite network. In some examples, the user terminal modifies and transfers packets via an exchange node, in order to transmit packets via other satellite networks without obtaining information of the other satellite networks.

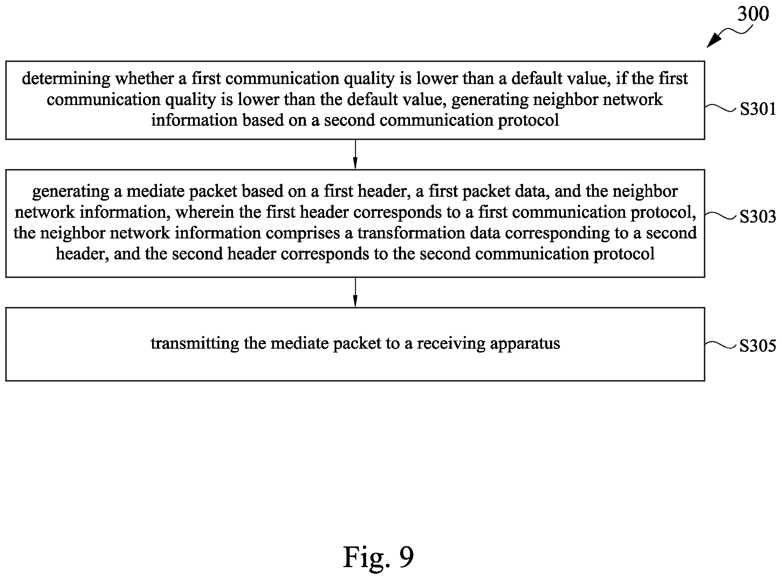

Please refer to Fig. 9, which is a flow diagram illustrating a transmission method 300 according to a second embodiment of the present disclosure. The transmission method 300 comprises steps S301-S305. The transmission method 300 is configured to transmit a packet to another satellite network via a receiving apparatus. The transmission method 300 can be executed by an electronic apparatus (e.g., the user terminal UT in the first embodiment).

First, in the step S301, the electronic apparatus determining whether a first communication quality is lower than a default value, if the first communication quality is lower than the default value, generating neighbor network information based on a second communication protocol.

Next, in the step S303, the electronic apparatus generating a mediate packet based on a first header, a first packet data, and the neighbor network information, wherein the first header corresponds to a first communication protocol, the neighbor network information comprises a transformation data corresponding to a second header, and the second header corresponds to the second communication protocol.

Finally, in the step S305, the electronic apparatus transmitting the mediate packet to a receiving apparatus.

In some embodiments, the step S303 further comprises the electronic apparatus receiving a packet format from the receiving apparatus, wherein the packet format corresponds to the second communication protocol; and the electronic apparatus generating the neighbor network information based on the packet format.

In some embodiments, the step S305 further comprises the electronic apparatus generating the first header comprising a first pointer based on the first communication protocol, wherein the first pointer comprises an access location of the neighbor network information in the mediate packet to make the receiving apparatus able to access the neighbor network information based on the first pointer.

In some embodiments, the step S305 further comprises the electronic apparatus generating the second header based on the first header and the second communication protocol; and the electronic apparatus generating the mediate packet based on the first header, the first packet data, the neighbor network information, and the second header, wherein the neighbor network information comprises a second pointer, and the second pointer comprises an access location of the second header in the mediate packet to make the receiving apparatus able to access the second header based on the second pointer.

In some embodiments, the step S305 further comprises the electronic apparatus generating a third header based on the first header and a third communication protocol, wherein the third communication protocol is different from the first communication protocol and the second communication protocol; and the electronic apparatus generating the mediate packet based on the first header, the first packet data, the neighbor network information, the second header, and the third header, wherein the neighbor network information comprises a third pointer, and the third pointer comprises an access location of the third header in the mediate packet to make the receiving apparatus able to access the third header based on the third pointer.

In some embodiments, the transmission method 300 further comprises the electronic apparatus comparing the first communication quality and a second communication quality between the receiving apparatus and the second communication satellite; and in response to the first communication quality being higher than the second communication quality, the electronic apparatus transmitting the first packet data to the first communication satellite.

In some embodiments, the transmission method 300 further comprises in response to the first communication quality being higher than the second communication quality, the electronic apparatus not generating the neighbor network information.

In some embodiments, the transmission method 300 further comprises the electronic apparatus receiving a connection information from the receiving apparatus, wherein the connection information corresponds to the receiving apparatus and the second communication satellite; and the electronic apparatus determining the second communication quality based on the connection information.

In some embodiments, the communication interface of the electronic apparatus transmitting the mediate packet to an exchange node to make the exchange node to transmit another mediate packet to the receiving apparatus.

In some embodiments, the transmission method 300 further comprises the electronic apparatus determining a first communication quality between the communication interface and the first communication satellite.

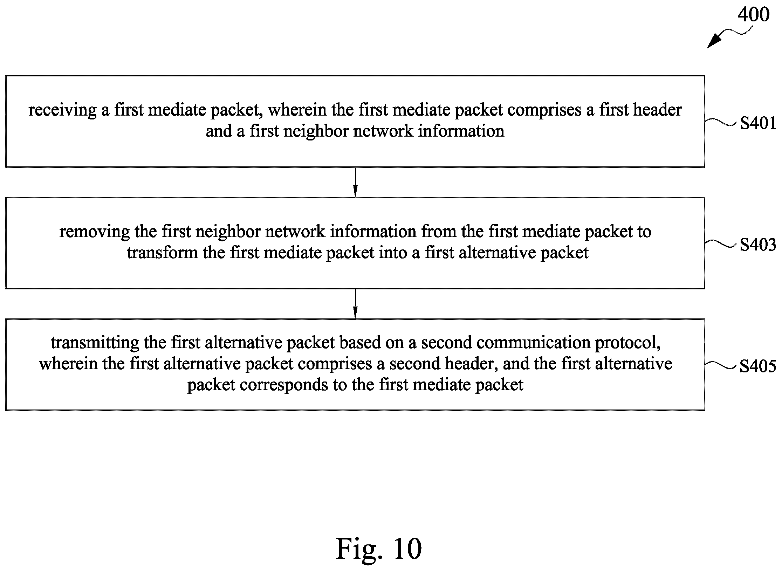

Please refer to Fig. 10, which is a flow diagram illustrating a receiving method 400 according to the second embodiment of the present disclosure. The receiving method 400 comprises steps S401-S405. The receiving method 400 is configured to transfer the packet from another satellite network. The receiving method 400 can be executed by an electronic apparatus (e.g., the user terminal UT in the first embodiment).

First, in the step S301, the electronic apparatus receiving a first mediate packet, wherein the first mediate packet comprises a first header and first neighbor network information.

Next, in the step S303, the electronic apparatus removing the first neighbor network information from the first mediate packet to transform the first mediate packet into a first alternative packet.

Finally, in the step S305, the electronic apparatus transmitting the first alternative packet based on a second communication protocol, wherein the first alternative packet comprises a second header, and the first alternative packet corresponds to the first mediate packet.

In some embodiments, the receiving method 400 further comprises the electronic apparatus replacing a packet source and a packet destination in the first header; and the electronic apparatus generating the second header based on the replaced first header.

In some embodiments, the receiving method 400 further comprises in response to receiving a second alternative packet corresponding to a transmission apparatus from a second communication satellite, the electronic apparatus generating second neighbor network information based on a first communication protocol corresponding to the first mediate packet, wherein the second alternative packet comprises a second packet data, and the transmission apparatus corresponds to the first mediate packet; and the electronic apparatus transmitting a second mediate packet to the transmission apparatus, wherein the second mediate packet comprises the second neighbor network information and the second packet data.

In some embodiments, the receiving method 400 further comprises the electronic apparatus generating third neighbor network information based on a third communication protocol; the electronic apparatus generating a third mediate packet based on the second header, a first packet data in the first mediate packet, and the third neighbor network information, wherein the third neighbor network information comprises a transformation data corresponding to a third header, and the third header corresponds to the third communication protocol; and the electronic apparatus transmitting the third mediate packet to a second receiving apparatus to make the second receiving apparatus to transmit the first packet data to a third communication satellite based on the third communication protocol.

In some embodiments, the step of generating the third neighbor network information further comprises the electronic apparatus determining a second communication quality between the communication interface and the second communication satellite; and in response to the second communication quality being lower than a default value, the electronic apparatus generating the third neighbor network information based on the third communication protocol.

In some embodiments, the second header is generated by the electronic apparatus based on the first header and the first neighbor network information, and the second header corresponds to the second communication protocol.

In some embodiments, the first alternative packet comprises the first packet data in the first mediate packet.

It is noted that, the transmission apparatus, the receiving apparatus, and/or the second receiving apparatus may be the user terminal UT in the first embodiment, and the first communication satellite and/or the second communication satellite may be the communication satellite SAT1 and/or SAT2 in the first embodiment.

In summary, the transmission and receiving method provided by the present disclosure may transmit packets via another satellite network while disconnected to communication satellite or connection unstable. Also, the user terminal may utilize different packet formats and neighbor network information corresponding to different combination of satellite networks. Correspondingly, the receiving user terminal is able to modify the packet and transmit via another satellite network. In some examples, the user terminal modifies and transmits packets via an exchange node, in order to transmit packets via other satellite networks without obtaining information of the other satellite networks.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A transmission apparatus, **characterized in that**, comprising a communication interface (14) and a processor (12), the processor (12) is electrically connected to the communication interface (14), the communication interface (14) is configured to be communicatively connected to a receiving apparatus, wherein the communication interface (14) is configured to be communicatively connected to a first communication satellite (SAT1, SAT2, SAT3) based on a first communication protocol, the transmission apparatus is communicatively connected to a second communication satellite (SAT1, SAT2, SAT3) based on a second communication protocol, there is a first communication quality between the communication interface (14) and the first communication satellite (SAT1, SAT2, SAT3), and the transmission apparatus is configured to execute the following steps:
the processor (12) determining whether the first communication quality is lower than a default value, if the first communication quality is lower than the default value, generating neighbor network information (NNI) based on the second communication protocol, and the processor (12) generating a mediate packet based on a first header, a first packet data, and the neighbor network information (NNI), wherein the first header corresponds to the first communication protocol, the neighbor network information (NNI) comprises a transformation data corresponding to a second header, and the second header corresponds to the second communication protocol; and
the communication interface (14) transmitting the mediate packet to the receiving apparatus.

2. The transmission apparatus of claim 1, wherein the step of the processor (12) generating the neighbor network information (NNI) further comprises:
receiving a packet format from the receiving apparatus, wherein the packet format corresponds to the second communication protocol; and
generating the neighbor network information (NNI) based on the packet format.

3. The transmission apparatus of claims 1 or 2, wherein the step of the processor (12) generating the mediate packet further comprises:
generating the first header comprising a first pointer based on the first communication protocol, wherein the first pointer comprises an access location of the neighbor network information (NNI) in the mediate packet to make the receiving apparatus able to access the neighbor network information (NNI) based on the first pointer.

4. The transmission apparatus of claims 1 or 2, wherein the step of the processor (12) generating the mediate packet further comprising:
generating the second header based on the first header and the second communication protocol; and
generating the mediate packet based on the first header, the first packet data, the neighbor network information (NNI), and the second header, wherein the neighbor network information (NNI) comprises a second pointer, and the second pointer comprises an access location of the second header in the mediate packet to make the receiving apparatus able to access the second header based on the second pointer.

5. The transmission apparatus of claim 4, wherein the step of the processor (12) generating the mediate packet further comprising:
generating a third header based on the first header and a third communication protocol, wherein the third communication protocol is different from the first communication protocol and the second communication protocol; and
generating the mediate packet based on the first header, the first packet data, the neighbor network information (NNI), the second header, and the third header, wherein the neighbor network information (NNI) comprises a third pointer, and the third pointer comprises an access location of the third header in the mediate packet to make the receiving apparatus able to access the third header based on the third pointer.

6. The transmission apparatus of anyone of claims 1 to 5, wherein the processor (12) is further configured to execute the following steps:
comparing the first communication quality and a second communication quality between the receiving apparatus and the second communication satellite (SAT1, SAT2, SAT3); and
in response to the first communication quality being higher than the second communication quality, transmitting the first packet data to the first communication satellite (SAT1, SAT2, SAT3).

7. The transmission apparatus of claim 6, wherein the processor (12) is further configured to execute the following steps:
receiving a connection information from the receiving apparatus, wherein the connection information corresponds to the receiving apparatus and the second communication satellite (SAT1, SAT2, SAT3); and
determining the second communication quality based on the connection information.

8. The transmission apparatus of anyone of claims 1 to 7, further comprising:
the communication interface (14) transmitting the mediate packet to an exchange node (EN) to make the exchange node (EN) to transmit another mediate packet to the receiving apparatus.

9. A receiving apparatus, **characterized in that**, configured to receive a first mediate packet, the first mediate packet comprises a first header and first neighbor network information (NNI), the receiving apparatus is communicatively connected to a second communication satellite (SAT1, SAT2, SAT3) based on a second communication protocol to transmit a first alternative packet, the first alternative packet comprises a second header, and the first alternative packet corresponds to the first mediate packet, the receiving apparatus comprises:
a communication interface (14), configured to receive the first mediate packet and transmit the first alternative packet; and
a processor (12), electrically connected to the communication interface (14), configured to receive the first mediate packet, remove the first neighbor network information (NNI) from the first mediate packet to transform the first mediate packet into the first alternative packet, and transmit the first alternative packet to the communication interface (14).

10. The receiving apparatus of claim 9, wherein the processor (12) further executes the following steps:
replacing a packet source and a packet destination in the first header; and
generating the second header based on the replaced first header.

11. The receiving apparatus of claims 9 or 10, wherein the processor (12) is further configured to execute the following steps:
in response to receiving a second alternative packet corresponding to a transmission apparatus from the second communication satellite (SAT1, SAT2, SAT3), generating second neighbor network information (NNI) based on a first communication protocol corresponding to the first mediate packet, wherein the second alternative packet comprises a second packet data; and
transmitting a second mediate packet to the transmission apparatus, wherein the second mediate packet comprises the second neighbor network information (NNI) and the second packet data.

12. The receiving apparatus of anyone of claims 9 to 11, wherein the communication interface (14) is further communicatively connected to a second receiving apparatus, the second receiving apparatus is communicatively connected to a third communication satellite (SAT1, SAT2, SAT3) based on a third communication protocol, and the processor (12) is further configured to execute the following steps:
generating third neighbor network information based on the third communication protocol;
generating a third mediate packet based on the second header, a first packet data in the first mediate packet, and the third neighbor network information, wherein the third neighbor network information comprises a transformation data corresponding to a third header, and the third header corresponds to the third communication protocol; and
transmitting the third mediate packet to the second receiving apparatus to make the second receiving apparatus to transmit the first packet data to the third communication satellite (SAT1, SAT2, SAT3).

13. The receiving apparatus of claim 12, wherein the step of the processor (12) generating the third neighbor network information further comprises:
determining a second communication quality between the communication interface (14) and the second communication satellite (SAT1, SAT2, SAT3); and
in response to the second communication quality being lower than a default value, generating the third neighbor network information based on the third communication protocol.

14. A transmission method, **characterized in that**, being adapted for use in an electronic apparatus, wherein the transmission method comprises the following steps:
determining whether a first communication quality is lower than a default value, if the first communication quality is lower than the default value, generating neighbor network information based on a second communication protocol;
generating a mediate packet based on a first header, a first packet data, and the neighbor network information, wherein the first header corresponds to a first communication protocol, the neighbor network information comprises a transformation data corresponding to a second header, and the second header corresponds to the second communication protocol; and
transmitting the mediate packet to a receiving apparatus.

15. A receiving method, being adapted for use in an electronic apparatus, wherein the receiving method comprises the following steps:
receiving a first mediate packet, wherein the first mediate packet comprises a first header and first neighbor network information;
removing the first neighbor network information from the first mediate packet to transform the first mediate packet into a first alternative packet; and
transmitting the first alternative packet based on a second communication protocol, wherein the first alternative packet comprises a second header, and the first alternative packet corresponds to the first mediate packet.

## Amended claims

### Amended claims in accordance with Rule 137(2) EPC.

1. A transmission apparatus, **characterized in that**, comprising a communication interface (14) and a processor (12), the processor (12) is electrically connected to the communication interface (14), the communication interface (14) is configured to be communicatively connected to a receiving apparatus, wherein the communication interface (14) is configured to be communicatively connected to a first communication satellite (SAT1, SAT2, SAT3) based on a first communication protocol, the receiving apparatus is communicatively connected to a second communication satellite (SAT1, SAT2, SAT3) based on a second communication protocol with a packet format different from the first communication protocol, and the transmission apparatus is configured to execute the following steps:
the processor (12) determining whether a first communication quality between the communication interface (14) and the first communication satellite (SAT1, SAT2, SAT3) is lower than a default value, if the first communication quality is lower than the default value, receiving the packet format corresponding to the second communication protocol from the receiving apparatus, and generating neighbor network information (NNI) based on the packet format, and the processor (12) generating a mediate packet based on a first header, a first packet data, and the neighbor network information (NNI), wherein the first header corresponds to the first communication protocol, the neighbor network information (NNI) comprises a transformation data corresponding to a second header, and the second header corresponds to the second communication protocol; and
the communication interface (14) transmitting the mediate packet to the receiving apparatus.

2. The transmission apparatus of claim 1 , wherein the step of the processor (12) generating the mediate packet further comprises:
generating the first header comprising a first pointer based on the first communication protocol, wherein the first pointer comprises an access location of the neighbor network information (NNI) in the mediate packet to make the receiving apparatus able to access the neighbor network information (NNI) based on the first pointer.

3. The transmission apparatus of claim 1 , wherein the step of the processor (12) generating the mediate packet further comprising:
generating the second header based on the first header and the second communication protocol; and
generating the mediate packet based on the first header, the first packet data, the neighbor network information (NNI), and the second header, wherein the neighbor network information (NNI) comprises a second pointer, and the second pointer comprises an access location of the second header in the mediate packet to make the receiving apparatus able to access the second header based on the second pointer.

4. The transmission apparatus of claim 3, wherein the step of the processor (12) generating the mediate packet further comprising:
generating a third header based on the first header and a third communication protocol, wherein the third communication protocol is different from the first communication protocol and the second communication protocol; and
generating the mediate packet based on the first header, the first packet data, the neighbor network information (NNI), the second header, and the third header, wherein the neighbor network information (NNI) comprises a third pointer, and the third pointer comprises an access location of the third header in the mediate packet to make the receiving apparatus able to access the third header based on the third pointer.

5. The transmission apparatus of anyone of claims 1 to 4, wherein the processor (12) is further configured to execute the following steps:
comparing the first communication quality and a second communication quality between the receiving apparatus and the second communication satellite (SAT1, SAT2, SAT3); and
in response to the first communication quality being higher than the second communication quality, transmitting the first packet data to the first communication satellite (SAT1, SAT2, SAT3).

6. The transmission apparatus of claim 5, wherein the processor (12) is further configured to execute the following steps:
receiving a connection information from the receiving apparatus, wherein the connection information corresponds to the receiving apparatus and the second communication satellite (SAT1, SAT2, SAT3); and
determining the second communication quality based on the connection information.

7. The transmission apparatus of anyone of claims 1 to 6, further comprising:
the communication interface (14) transmitting the mediate packet to an exchange node (EN) to make the exchange node (EN) to transmit another mediate packet to the receiving apparatus.

8. A receiving apparatus, **characterized in that**, configured to receive a first mediate packet, the first mediate packet comprises a first header and first neighbor network information (NNI), wherein the first header corresponds to a first communication protocol, the neighbor network information is generated based on a packet format corresponding to a second communication protocol that differs from the first communication protocol and comprises a transformation data corresponding to a second header, wherein the packet format is transmitted from the receiving apparatus, and the second header corresponds to the second communication protocol and a first alternative packet corresponds to the first mediate packet, the receiving apparatus comprises:
a communication interface (14), configured to receive the first mediate packet and communicatively connected to a second communication satellite (SAT1, SAT2, SAT3) based on the second communication protocol to transmit the first alternative packet; and
a processor (12), electrically connected to the communication interface (14), configured to receive the first mediate packet, remove the first neighbor network information (NNI) from the first mediate packet to transform the first mediate packet into the first alternative packet, and transmit the first alternative packet to the communication interface (14) to transmit to the second communication satellite (SAT1, SAT2, SAT3), wherein the first alternative packet comprises the second header, and the first alternative packet corresponds to the first mediate packet.

9. The receiving apparatus of claim 8, wherein the processor (12) further executes the following steps:
replacing a packet source and a packet destination in the first header; and
generating the second header based on the replaced first header.

10. The receiving apparatus of claims 8 or 9, wherein the processor (12) is further configured to execute the following steps:
in response to receiving a second alternative packet corresponding to a transmission apparatus from the second communication satellite (SAT1, SAT2, SAT3), generating second neighbor network information (NNI) based on a first communication protocol corresponding to the first mediate packet, wherein the second alternative packet comprises a second packet data; and
transmitting a second mediate packet to the transmission apparatus, wherein the second mediate packet comprises the second neighbor network information (NNI) and the second packet data.

11. The receiving apparatus of anyone of claims 8 to 10, wherein the communication interface (14) is further communicatively connected to a second receiving apparatus, the second receiving apparatus is communicatively connected to a third communication satellite (SAT1, SAT2, SAT3) based on a third communication protocol, and the processor (12) is further configured to execute the following steps:
generating third neighbor network information based on the third communication protocol;
generating a third mediate packet based on the second header, a first packet data in the first mediate packet, and the third neighbor network information, wherein the third neighbor network information comprises a transformation data corresponding to a third header, and the third header corresponds to the third communication protocol; and
transmitting the third mediate packet to the second receiving apparatus to make the second receiving apparatus to transmit the first packet data to the third communication satellite (SAT1, SAT2, SAT3).

12. The receiving apparatus of claim 11, wherein the step of the processor (12) generating the third neighbor network information further comprises:
determining a second communication quality between the communication interface (14) and the second communication satellite (SAT1, SAT2, SAT3); and
in response to the second communication quality being lower than a default value, generating the third neighbor network information based on the third communication protocol.

13. A transmission method, **characterized in that**, being adapted for use in an electronic apparatus, wherein the transmission method comprises the following steps:
determining whether a first communication quality between a communication interface (14) of the electronic apparatus and a first communication satellite communicatively connected based on a first communication protocol is lower than a default value, if the first communication quality is lower than the default value, generating neighbor network information based on a packet format corresponding to a second communication protocol that differs from the first communication protocol, wherein the packet format is transmitted from a receiving apparatus;
generating a mediate packet based on a first header, a first packet data, and the neighbor network information, wherein the first header corresponds to thefirst communication protocol, the neighbor network information comprises a transformation data corresponding to a second header, and the second header corresponds to the second communication protocol; and
transmitting the mediate packet to the receiving apparatus communicatively connected to a second communication satellite (SAT1, SAT2, SAT3) based on the second communication protocol

14. A receiving method, being adapted for use in an electronic apparatus, wherein the receiving method comprises the following steps:
receiving a first mediate packet, wherein the first mediate packet comprises a first header and first neighbor network information, wherein the first header corresponds to a first communication protocol, the neighbor network information is generated based on a packet format correspond to a second communication protocol that differs from the first communication protocol and comprises transformation data corresponding to a second header, wherein the packet format is transmitted from the electronic apparatus, and the second header corresponds to the second communication protocol;
removing the first neighbor network information from the first mediate packet to transform the first mediate packet into a first alternative packet, wherein the first alternative packet comprises a second header, and the first alternative packet corresponds to the first mediate packet; and
transmitting the first alternative packet to a communication satellite (SAT1, SAT2, SAT3) based on the second communication protocol.
